# EUROPÄISCHE PATENTSCHRIFT

(11) **EP 1 898 014 B1**
(45) Veröffentlichungstag und Bekanntmachung des Hinweises auf die Patenterteilung: **16.01.2013**
(21) Anmeldenummer: 07016064.3
(22) Anmeldetag: 16.08.2007
(51) Int. Cl.: E04B 1/80

(54) **Vakuumisolationspaneel mit Aussparung im Dämmstoffstützkörper**
Vacuum insulation panel with duct in insulation material supporting shells
Panneau d'isolation sous vide doté d'un évidement dans une pièce d'appui de matériau isolant

(30) Priorität: 01.09.2006 DE 202006013562 U
(43) Veröffentlichungstag der Anmeldung: 12.03.2008
(73) Patentinhaber: Porextherm-Dämmstoffe GmbH, 87437 Kempten (DE)
(72) Erfinder: Eberhardt, Hans-Frieder, 89537 Giengen/Brenz-Burgberg (DE); Henn, Dieter, 87448 Waltenhofen (DE)
(74) Vertreter: Hoppe, Lars

(56) Entgegenhaltungen:
- AU-B3- 712 695
- DE-A1- 10 234 409
- JP-A- 8 312 880

## Beschreibung

Die Erfindung betrifft ein Vakuumisolationspaneel mit den oberbegrifflichen Merkmalen des Anspruchs 1.

Vakuumisotationspaneele, meist auf Basis von feindispersem Silixiumdioxid (pyrogen erzeugter Kieselsäure oder gefällter Kieselsäure) oder Aerogelen dienen in verschiedenen Anwendungen zur Reduzierung der Wärmeleitung, die durch ein hohes Vakuum unterstützt wird. Wegen ihrer Leistungsfähigkeit eröffnen Vakuumisolationspaneele eine Vielzahl von Anwendungsmöglichkeiten auch im Baubereich, z. B, bei der Fassadenisolierung. Ebenso kann durch den Einbau von Vakuumisolationspaneelen beispielsweise eine längere Transportzeit bei Kühltransporten oder eine Verringerung der Abmessungen isolierter Frachtbehälter erreicht werden.

Ein Vakuumisolationspaneel (VIP) besteht in der Regel aus einem von einer vakuumdichten Schutzfolie umhüllten Dämmstoffkem. Nach Einbringen des Kerns in die Folienumhüllung wird das Paneel evakuiert und versiegelt (verschweißt). Das Kernmaterial dient dabei zum Stützen der Paneelwände. Zudem hemmt es die Bewegung eventuell in der Platte noch vorhandener Gasmoleküle und bildet eine Sperrschicht gegen Wärmeübertragung durch Strahlung, insbesondere durch Trübungsmittel, um die Infrarotstrahlung zu zerstreuen oder zu absorbieren. Die Dämmwirkung von Vakuumisolationspaneelen wird nicht unerheblich durch Randeffekte an den Siegelnähten der den Dämmstoffkern umhüllenden Folie(-n) beeinflusst, die auch an Aussparungen in den Vakuumisolationspaneelen auftreten. Solche Aussparungen in den Vakuumisolationspaneelen sind gerade im Baubereich notwendig, wenn beispielsweise aus der zu isolierenden Wand Leitungen oder Rohre austreten, die umbaut oder durch die Vakuumisolationspaneele hindurchgeführt werden müssen.

Um derartige Aussparungen in Vakuumisolationspaneelen zu bilden, ist beispielsweise aus der US 2005/0053755 ein Verfahren bekannt, bei dem die Ober- mit der Unterfolie der Folienumhüllung des Vakuumisolationspaneels in der Aussparung direkt verschweißt wird. Zudem wird in der DE 102 34 409 ein Verfahren zur Bildung von Einbuchtungen an den Rändern von Vakuumisolationspaneelen beschrieben, bei dem die Einbuchtungen die Form eines Ellipsen- oder Kreisabschnittes aufweisen.

Nachteil der mit den bekannten Verfahren gebildeten Aussparungen oder Einbuchtungen in Vakuumisolationspaneelen ist es, dass im erstgenannten Fall neben einer zusätzlich im Bereich der Aussparung eingebrachten Siegelnaht, an der die bereits genannten Randeffekte auftreten, der Bereich der Aussparung weitgehend ungedämmt bleibt und ein Vakuumisolationspaneel mit derartigen Aussparungen zudem anfällig für mechanische Beschädigungen ist. Vakuumisoletionspaneele, die mit dem zweitgenannten Verfahren hergestellt werden, haben den Nachteil, dass eine passgenaue Aussparung, insbesondere mit Geometrien die Kanten oder sonstige Sonderformen aufweisen, nicht herstellbar sind.

Aufgabe der vorliegenden Erfindung ist es daher, ein kostengünstiges, einfach zu realisierendes Vakuumisolationspaneel mit einer passgenauen Aussparung zu schaffen.

Diese Aufgabe wird durch ein Vakuumisolationspaneel gemäß Anspruch 1 gelöst. Vorteilhafte Ausgestaltungen sind Gegenstand der Unteransprüche.

Das erfindungsgemäße Vakuumisolationspaneel weist einen Dämmstoffstützkörper in einer vakuumdichten Folienumhüllung auf, wobei eine randseitige Aussparung vorgesehen ist. Das Vakuumisolationspaneel ist dadurch gekennzeichnet, dass sich die Aussparung in die Hauptfläche hinein erstreckt und in der Aussparung ein Einsatzelement mit wenigstens einem, die Aussparung einfassenden Kragen angeordnet ist und die vakuumdichte Folienumhüllung mit dem Kragen und/oder dem Einsatzelement verschweißt ist,

Durch diese Ausgestaltung mit wenigstens einem Kragen, ist es möglich, dass das Einsatzelement einfach in die Aussparung im Dämmstoffstützkörper eines Vakuumisolationspaneels von der Seite her eingesteckt wird. Nach dem Anbringen des Einsatzelementes wird der Dämmstoffstützkörper mit einer vakuumdichten Folienumhüllung versehen. Die vakuumdichte Folienumhüllung wird evakuiert und anschließend an den Rändern durch eine Siegelnaht verschlossen. Im Zuge der Versiegelung wird die Folienumhüllung mit dem Kragen des Einsatzelementes (und ggf, auch mit diesem selbst) verschweißt und somit eine vakuumdichte Aussparung im Vakuumisolationspaneel geschaffen. Das Einsatzelement weist in der Regel eine relativ geringe Materialstärke auf, um Isolationsverluste durch Festkörperleitung möglichst niedrig zu halten.

Des weiteren besteht die Möglichkeit, dass der mit dem Einsatzelement versehene Dämmstoffstützkörper in einen Folienbeutel eingelegt wird. Daraus ergibt sich der Vorteil, dass nach dem Evakuieren der Folienumhüllung nur eine kurze, seitliche Siegelnaht gebildet werden muss. Dabei kann die Folie gleichzeitig mit dem vollständig eingehüllten Einsatzelement verschweißt werden. Dieses Vorgehen garantiert zum einen den stabilen Sitz des Einsatzelementes im Dämmstoffstützkörper und zum anderen eine diffusionsdichte Auskleidung der Aussparung.

In einer bevorzugten Ausführungsform der vorliegenden Erfindung ist am Einsatzelement ein umlaufend ausgebildeter Kragen vorgesehen, der ggf. auch zackenartig unterbrochen sein kann. Ein derartiger Kragen ermöglicht es, das Einsatzelement auf die Aussparung aufzustecken oder aufzuschieben und gewährleistet so einen exakten, sicheren Sitz des Einsatzelementes. Ein derart ausgeführtes Einsatzelement verfügt außerdem über zusätzliche mit der Folienumhüllung verschweissbare Flächen und trägt somit zu einer stabileren Auskleidung der Aussparung bei.

Als besonders vorteilhaft wird angesehen, wenn zwei Kragen am Einsatzelement über Stege verbunden sind, die an den Seitenflächen des Vakuumisolationspaneels verlaufen. Derartige Stege verleihen zum einen dem Einsatzelement zusätzliche Stabilität, zum anderen definieren sie den genauen Abstand zwischen den Kragen. Da die Stege an den Seitenflächen des Vakuumisolationspaneels verlaufen, wird durch diese auch ein Verrutschen des Einsatzelementes wirkungsvoll verhindert.

Bevorzugt ist das Einsatzelement genau an die Form der Aussparung (oder Ausklinkung bzw. Ausnehmung) angepasst und kann dabei jede geometrische Form (z. B. halbrund, mehreckig, elliptisch usw., ggf. auch am Eckbereich) annehmen. Durch diese genaue Anpassung wird die Bildung von Hohlräumen zwischen Dämmstoffstützkörper und Einsatzelement, die zu Verlusten in der Isolationsleistung des Vakuumisolationspaneels führen könnten, vermieden, Zusätzlich wird das Einsatzelement durch die vollflächige Auflage stabilisiert und somit eine geringere Anfälligkeit gegenüber mechanischen Schäden erreicht.

Um Isolationsverluste durch das Einsatzelement, welche wegen des durch die in das Vakuumisolationspaneel eindiffundierten Gase und Feuchten verursachten Druckanstiegs entstehen, möglichst gering zu halten, weist dieses vorteilhafterweise auf seiner dem Dämmstoffstützkörper zugewandten Außenseite eine diffusionsdichte Beschichtung auf, Eine weitere Verbesserung der diffusionshemmenden Eigenschaften des Einsatzelementes kann dadurch erreicht werden, dass zusätzlich auch die Innenseite mit einer entsprechenden Beschichtung versehen ist. Eine derartige Beschichtung empfiehlt sich besonders bei Verwendung des erfindungsgemäßen Einsatzelementes in Aussparungen mit großen Abmessungen, um trotz der vergrößerten Randfläche, eine erhöhte Diffusion zu vermeiden.

Als besonders empfehlenswert wird angesehen, wenn die Beschichtung aus metallischen und/oder anorganischen Schichten gebildet ist, die auf die dem Dämmstoffstützkörper zugewandte Außenseite und/oder der dieser Außenseite gegenüberliegenden Innenseite des Einsatzelementes aufgedampft sind. Metallische Schichten können beispielsweise aus Aluminium gebildet werden, wohingegen anorganische Schichten beispielsweise aus auf die entsprechende(n) Seite(n) des Einsatzes aufgedampftem SiOₓ bestehen. Die Schaffung der Schichten kann über geeignete Depositionsverfahren durchgeführt werden.

Bevorzugt besteht das Einsatzelement aus Kunststoff. Hierfür geeignet sind verschiedene thermoplastische Kunststoffe, wie beispielsweise HDPE und PP sowie verschiedene Copolymere oder Polyester. Darüber hinaus kann das Einsatzelement allerdings auch aus einem Material wie Polyamid bestehen, wobei der zu verschweißende Kragen mit einem thermisch verformbaren Material beschichtet werden kann, um eine vakuumdichte Siegelung zwischen dem Kragen und der Folienumhüllung des Vakuumisolationspaneels zu gewährleisten. Das Einsatzelement kann mittels mechanischer oder thermischer Verfahren hergestellt werden. Als besonders geeignet werden hierfür Spritzgussverfahren angesehen, da das Einsatzelement mit Hilfe dieser Verfahren besonders kostengünstig und dünnwandig produziert werden kann.

Bevorzugt bildet die Innenseite des Einsatzelementes zu einem hindurchzuführenden Gegenstand eine Spielpassung. Bei diesen Gegenständen kann es sich im Baubereich beispielsweise um Rohre oder Leitungen handeln, die bereits im zu isolierenden Rohbau vorhanden sind und mit den Vakuumisolationspaneel umbaut werden sollen. Die Passung wird dabei insbesondere so gewählt, dass die Vakuumisolationspaneele auf dem jeweiligen, hindurchzuführenden Gegenstand ohne merkliches Spiel verschiebbar sind, Vorteil einer derartigen passgenauen Ausgestaltung des Vakuumisolationspaneels ist es, dass ungedämmte Bereiche weitestgehend vermieden werden und somit im Berührungsbereich zwischen den Aussparungen und den hindurchgeführten Gegenständen Verluste in der Isolationsleistung so niedrig wie möglich gehalten werden.

Eine weitere vorteilhafte Ausführungsform des Vakuumisolationspaneels sieht vor, dass die Innenseite des Einsatzelementes eine reibungsmindernde Beschichtung aufweist. Dabei kann es sich um einen PTFE-Überzug oder um eine Auflage aus synthetischen Gleitstoffen handeln. Vorteil einer solchen Beschichtung ist es, dass dadurch der Austausch oder Ausbau der durch das erfindungsgemäße Vakuumisolationspaneel hindurchgeführten Gegenstände wesentlich erleichtert wird, insbesondere wenn das Vakuumisolationspaneel im Schiebesitz auf oder um den Gegenstand herum angebracht sind.

Weitere Vorteile, Merkmale und Besonderheiten der Erfindung ergeben sich aus der nachfolgenden Beschreibung bevorzugter, jedoch nicht beschränkender Ausführungsformen der Erfindung anhand der schematischen Zeichnungen. Es zeigen:
- Fig. 1: ein erfindungsgemäßes Vakuumisolationspaneel in perspektivischer Ansicht und
- Fig. 2a und 2b: Einsätze zur Verwendung mit quadratischen bzw. halbrunden Aussparungen in einem Vakuumisolationspeneel in perspektivischer Ansicht.

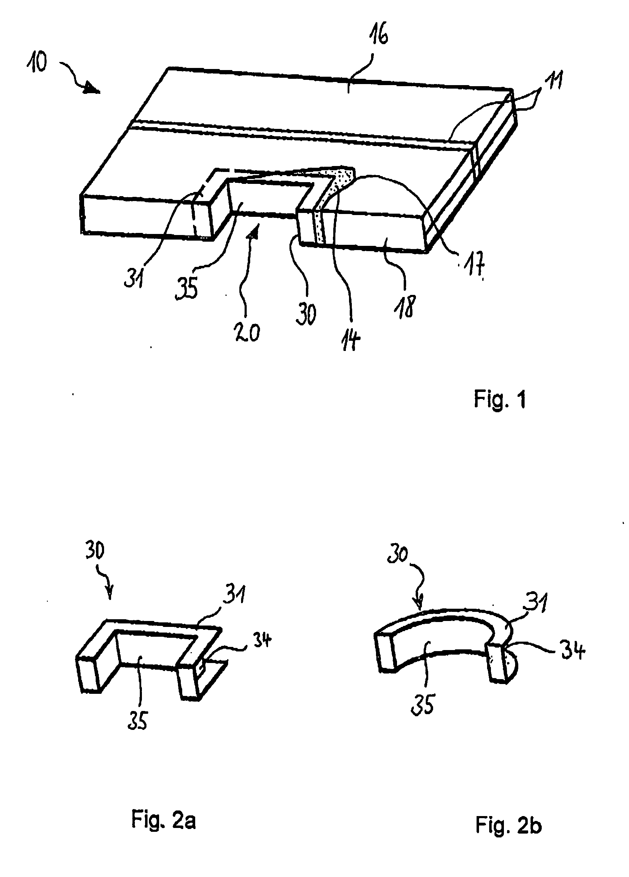

Fig. 1 zeigt ein erfindungsgemäßes Vakuumisolationspanee! 10 in perspektivischer Ansicht. Das Vakuumisolationspaneel 10 besteht aus einem Dämmstoffstützkörper 14 (punktiert angedeutet) mit vakuumdichter Folienumhüllung 17 und weist in der Seitenfläche 18 eine hier rechteckige Aussparung 20 auf. In diese Aussparung 20 wurde ein Einsatzelement 30 von der Seite her eingeschoben, das in der Form exakt an die Aussparung 20 angepasst ist. Das Einsatzelement 30 verfügt über einen überstehenden, umlaufenden Kragen 31, der an der Hauptfläche 16 des Dämmstoffstützkörpers 14 sowie an dessen Rand bzw. Seitenfläche 18 anliegt. Das Einsatzelement 30 kleidet somit die gesamte Aussparung 20 passgenau aus. Um Isolationsverluste aufgrund der relativ großen Fläche der Aussparung 20 so gering wie möglich zu halten, weist sowohl die dem durchzuführenden Gegenstand (nicht dargestellt) zugewandte Innenseite 35 des Einsatzelementes 30 als auch die am Dämmstoffstützkörper 14 anliegende Außenseite 34 eine diffusionsdichte Beschichtung auf Aluminiumbasis auf. Die vakuumdichte Folienumhüllung 17 ist mit dem Kragen 31 des Einsatzelementes 30 verschweißt.

Das Einsatzelement 30 ist hier im Bereich der rechten hinteren Ecke der Aussparung 20 ohne die vakuumdichte Folienumhüllung 17 gezeichnet, so dass der z.B. aus einem mikroporösen Material bestehende Dämmstoffstützkörper 14 (punktiert angedeutet) sowie der Kragen 31 des Einsatzelementes 30, der die Aussparung 20 des Dämmstoffstützkörpers 14 einfasst, besser zu erkennen sind. Der Dämmstützkörper 14 kann aus pyrogener oder gefällter Kieselsäure, einem Aerogel, offenzelligem PU- oder PS-Schaum, offenzelligem Polyisocyanuratschaum und Fasermaterialien sowie Kombinationen von verschiedenen offenzelligen oder mikro-/nanoporösen Materialien bestehen. Das Vakuumisolationspaneel 10 wird nach Anbringen der vakuumdichten Folienumhüllung 17 evakuiert und die vakuumdichte Folienumhüllung 17 anschließend verschweißt (oder allgemein versiegelt). Dadurch wird wenigstens eine umlaufende Siegelnaht 11 am Vakuumisolationspaneel 10 erzeugt und bevorzugt gleichzeitig mindestens eine Schweißverbindung mit dem Kragen 31 des Einsatzelementes 30 hergestellt.

Anstatt zweier Folien kann auch ein Folienbeutel verwendet werden, wie auf dem Gebiet der VIP-Herstellung gebräuchlich. Hierbei wird die Aussparung 20 und damit das eingeschobene Einsatzelement 30 zunächst von der vakuumdichten Folienumhüllung 17 bedeckt, Diese kann dann nach dem Versiegeln mit dem wenigstens einen Kragen 31 beim Einbau bzw. sonstigem Bedarf im freien Bereich der Aussparung 20 durchstoßen, aufgeschnitten oder ausgestanzt werden. Das Vakuumisolationspaneel 10 bleibt davon unberührt, d.h. das Vakuum wird nicht zerstört, da die vakuumdichte Folienumhüllung 17 gasdicht mit dem Kragen 31 verschweißt ist. Über die Aussparung 20 kann das Vakuumisolationspaneel 10, das an einer zu isolierenden Fläche (nicht dargestellt) befestigt werden soll, auf vorhandene Leitungen o.ä. aufgebracht werden und mit diesen wegen der passgenauen Ausführung der Einsatzelemente enge Toleranzen oder sogar eine Spielpassung bilden. Die durchgeführten Objekte können zusätzlich mit Dämmschäumen o.ä. eingebettet werden, um Diffusionsverluste an den Aussparungen 20 noch weiter zu verringern.

Das Einsatzelement 30, das in Fig. 2a dargestellt ist, wird mit seiner Form an eine rechteckige oder quadratische Aussparung 20 in einem.Vakuumisolationspanaal 10 bzw. in dessen Dämmstoffstützkörper 14 angepasst. Das Einsatzelement 30 verfügt über einen umlaufenden Kragen 31, der oben auf der Hauptfläche 16 des Dämmstoffstützkörpers 14 anliegt, dann an dessen Rand oder Seitenfläche 18 verläuft, um auch die untere Hauptfläche randseitig zu bedecken. Der Kragen 31 verhindert zum einen wirkungsvoll ein Verrutschen des Einsatzelementes 30 und bildet außerdem eine Führung, die das Auf- oder Einstecken des Einsatzelementes 30 auf den Dämmstoffstützkörper 14 erleichtert. Zusätzlich bildet der umlaufende Kragen 31 eine ausreichend große Fläche für eine gasdichte Verschweißung der Folienumhüllung 17 nach dem Evakuieren des Vakuumisolatiorisparleels 10.

Die Außenseite 34 des Einsatzelementes 30 ist bevorzugt mit einer diffusionsdichten Beschichtung versehen, die Isolationsverluste in den Aussparungen 20 des Vakuumisolationspaneels 10 wirkungsvoll minimiert, welche ansonsten wegen des durch die eindiffundierten Gase und Feuchten verursachten Druckanstiegs hervorgerufen werden können. Auch die Innenseite 35 des Einsatzelementes 30 kann eine entsprechende Beschichtung aufweisen, um die Isolationseigenschaften weiter zu verbessern.

Fig. 2b zeigt ein halbrundes Einsatzelement 30 zur Verwendung mit einer Aussparung 20 in einem erfindungsgemäßen Vakuumisolationspaneel 10. Aufgrund der halbrunden Form des Einsatzelementes 30 können derartige Vakuumisolationspaneele 10 beispielsweise dazu verwendet werden, ein Rohr zu umbauen. Im Zusammenspiel mit einem zweiten, ebenfalls mit einem halbrunden Einsatzelement 30 versehenen Vakuumisolationspaneel 10 können beispielsweise im Zuge einer Gebäuderenovierung nicht entfembare Leitungen oder Rohre umschlossen werden. Zudem kann durch Kombination unterschiedlich geformter Einsatzelemente 30 in entsprechend ausgeformten Aussparungen 20 das Vakuumisolationspaneel 10 an nahezu jede geometrische Form des hindurchzuführenden oder zu umschließenden Gegenstandes einfach und schnell angepasst werden.

Auch das halbrunde Einsatzelement 30 weist einen umlaufenden Kragen 31 auf, der das Verrutschen des Einsatzelementes 30 verhindert und bildet zudem eine Führung, die das Aufstecken des Einsatzelementes 30 auf den Dämmstoffstützkörper 14 erleichtert. Zusätzlich kann eine zuverlässige Verschweißung der vakuumdichten Folienumhüllung 17 mit dem umlaufenden Kragen 31 nach dem Evakuieren des Vakuumisolationspaneels 10 erfolgen, wobei auch gezackte oder wellenförmige Kanten am Kragen 31 denkbar sind. Dabei kann alternativ oder zusätzlich eine (weitere) Versiegelung (Schweißnaht) an der Innenseite 35 durchgeführt werden. Dies gilt auch bei Einsatzelementen 30 für Aussparungen oder Ausklinkungen im Eckbereich des Vakuumisolationspaneels 10.

Die Außenseite 34 dieses halbrunden Einsatzelementes 30 ist bevorzugt ebenfalls mit einer diffusionsdichten Beschichtung versehen, die einen Isolationsverlust in den Aussparungen 20 des Vakuumisolationspaneels 10 unterbindet, da das Eindiffundieren von Gasen und Feuchten in das Vakuumisvlationspaneel minimiert wird. Das gezeigte Einsatzelement 30, das bevorzugt zur isolierenden Umbauung von Rohren mit rundem Querschnitt verwendet wird, ist so dimensioniert, dass es mit dem durchgeführten Rohr eine Art Spielpassung bildet. Um ein möglichst reibungsfreies Bewegen des Vakuumisolationspaneels 10 auf dem Rohr zu ermöglichen, verfügt das Einsatzelement 30 auf seiner dem Rohr zugewandten Innenseite 35 über eine reibungsmindemde Beschichtung, Diese bewirkt einen Gleiteffekt, der das Verschieben der Teile von Hand gerade eben noch zulässt. Durch diese Passung wird die Isolationsleistung des Vakuumisolationspaneels 10 auf hohem Niveau gehalten. Eventuell noch vorhandene Zwischenräume sowie der Austrittsbereich der durchgeführten Gegenstände können zur weiteren Verbesserung der Isolierung zusätzlich mit wärmedämmenden Materialien wie z.B. PU-Schaum ausgefüllt werden.

### Bezugszeichenliste:

- 10 =: Vakuumisolationspaneel
- 11 =: Siegelnaht
- 14 =: Dämmstoffstützkörper (Kern)
- 16 =: Hauptfläche (Flachseite)
- 17 =: vakuumdichte Follenumhüllung
- 18 =: Seitenfläche
- 20 =: Aussparung
- 30 =: Einsatzelement
- 31 =: Kragen
- 34 =: Außenseite
- 35 =: Innenseite

## Patentansprüche

1. Vakuumisolationspaneel (10) mit einem Dämmstoffstützkörper (14) in einer vakuumdichten Folienumhüllung (17), wobei im Dämmstoffstützkörper (14) wenigstens eine randseitige Aussparung (20) vorgesehen ist, und wobei
sich die Aussparung (20) in die Hauptfläche (16) des Dämmstoffstützkörpers (14) erstreckt, **dadurch gekennzeichnet, dass**
in der Aussparung ein Einsatzelement (30) mit einer dem Dämmstoffstützkörper (14) zugewandten Außenseite (34) und einer von dieser abgewandten Innenseite (35) und wenigstens einem an der Hauptfläche (16) des Dämmstoffstützkörpers (14) anliegenden, die Aussparung (20) einfassenden Kragen (31) angeordnet ist und die Folienumhüllung (17) mit dem Kragen (31) und/oder dem Einsatzelement (30) verschweißt ist.

2. Vakuumisolationspaneel nach Anspruch 1, **dadurch gekennzeichnet, dass** der Kragen (31) umlaufend ausgebildet ist.

3. Vakuumisolationspaneel nach Anspruch 1 oder 2, **dadurch gekennzeichnet, dass** zwei Krägen (31) über Stege verbunden sind, die an den Seitenflächen (18) des Vakuumisolationspaneels (10) verlaufen.

4. Vakuumisolationspaneel nach einem der vorhergehenden Ansprüche,
**dadurch gekennzeichnet, dass**
die Form des Einsatzelementes (30) an die Aussparung (20) exakt angepasst ist.

5. Vakuumisolationspaneel nach einem der vorhergehenden Ansprüche,
**dadurch gekennzeichnet, dass**
das Einsatzelement (30) an seiner Außenseite (34) und/oder seiner Innenseite (35) eine diffusionsdichte Beschichtung aufweist.

6. Vakuumisolationspaneel nach Anspruch 5, **dadurch gekennzeichnet, dass**
die Beschichtung aus metallischen und/oder anorganischen auf die Außenseite (34) und/oder Innenseite (35) des Einsatzelementes (30) aufgedampften Schichten gebildet ist

7. Vakuumisolationspaneel nach einem der vorhergehenden Ansprüche,
**dadurch gekennzeichnet, dass**
das Einsatzelement (30) aus einem Kunststoffmaterial, insbesondere einem thermoplastischen Kunststoff oder Polyamid, besteht.

8. Vakuumisolationspaneel nach einem der vorhergehenden Ansprüche,
**dadurch gekennzeichnet, dass**
die Innenseite (35) des Einsatzelementes (30) mit einem hindurchzuführenden Gegenstand eine Spielpassung bildet.

9. Vakuumisolationspaneel nach einem der vorhergehenden Ansprüche,
**dadurch gekennzeichnet, dass**
die Innenseite (35) des Einsatzelementes (30) eine reibungsmindernde Beschichtung aufweist

## Claims

1. A vacuum insulation panel (10) with an insulation support body (14) in a vacuum-tight film wrapping (17), wherein at least one rim-side recess (20) is provided in the insulation support body (14), and wherein
the recess (20) extends into the main surface (16) of the insulation support body (14), **characterised in that**
an insertion element (30) is arranged in the recess, the insertion element comprising an outside (34) facing the insulation support body (14) and an inside (35) facing away from this and at least one collar (31) surrounding the recess (20), the collar being supported against the main surface (16) of the insulation support body (14), and **in that** the film wrapping (17) is welded to the collar (31) and/or the insertion element (30).

2. The vacuum insulation panel according to claim 1, **characterised in that**
the collar (31) extends circumferentially.

3. The vacuum insulation panel according to claim 1 or 2, **characterised in that**
two collars (31) are connected via webs which extend along the side surfaces (18) of the vacuum insulation panel (10).

4. The vacuum insulation panel according to one of the preceding claims, **characterised in that**
the shape of the insertion element (30) is adapted exactly to the recess (20).

5. The vacuum insulation panel according to one of the preceding claims, **characterised in that**
the insertion element (30) comprises a diffusion-proof coating on its outside (34) and/or its inside (35).

6. The vacuum insulation panel according to claim 5, **characterised in that**
the coating is formed of metallic and/or inorganic coatings vaporised onto the outside (34) and/or the inside (35) of the insertion element (30).

7. The vacuum insulation panel according to one of the preceding claims, **characterised in that**
the insertion element (30) consists of a plastic material, in particular a thermoplastic material or a polyamide.

8. The vacuum insulation panel according to one of the preceding claims, **characterised in that**
the inside (35) of the insertion element (30) forms a clearance fit with an object to be passed through.

9. The vacuum insulation panel according to one of the preceding claims, **characterised in that**
the inside (35) of the insertion element (30) comprises a friction-reducing coating.

## Revendications

1. Panneau d'isolation sous vide (10) avec un corps de soutien en matière calorifuge (14) dans une enveloppe en film (17) étanche au vide, dans le corps de soutien en matière calorifuge (14) étant prévu au moins un évidement (20) côté bordure et
l'évidement (20) s'étendant dans la surface principale (16) du corps de soutien en matière calorifuge (14), **caractérisé en ce que**
dans l'évidement est disposé un élément d'insertion (30) avec une face extérieure (34) dirigée vers le corps de soutien en matière calorifuge (14) et une face intérieure (35) opposée à ce dernier et au moins un collet (31) adjacent à la surface principale (16) du corps de soutien en matière calorifuge (14) entourant l'évidement (20) et **en ce que** l'enveloppe en film (17) est soudée avec le collet (31) et/ou avec l'élément d'insertion (30).

2. Panneau d'isolation sous vide selon la revendication 1, **caractérisé en ce que**
le collet (31) est conçu sous forme périphérique.

3. Panneau d'isolation sous vide selon la revendication 1 ou la revendication 2, **caractérisé en ce que**
deux collets (31) sont reliés par des listels, qui s'étendent sur les surfaces latérales (18) du panneau d'isolation sous vide (10).

4. Panneau d'isolation sous vide selon l'une quelconque des revendications précédentes, **caractérisé en ce que**
la forme de l'élément d'insertion (30) est exactement adaptée à l'évidement (20).

5. Panneau d'isolation sous vide selon l'une quelconque des revendications précédentes, **caractérisé en ce que**
sur sa face extérieure (34) et/ou sur sa face intérieure (35), l'élément d'insertion (30) comporte un revêtement étanche à la diffusion.

6. Panneau d'isolation sous vide selon la revendication 5, **caractérisé en ce que**
le revêtement est formé de couches métalliques et/ou anorganiques appliquées par dépôt de vapeur sur la face extérieure (34) et/ou sur la face intérieure (35) de l'élément d'insertion (30).

7. Panneau d'isolation sous vide selon l'une quelconque des revendications précédentes, **caractérisé en ce que**
l'élément d'insertion (30) est constitué d'une matière plastique, notamment d'une matière thermoplastique ou de polyamide.

8. Panneau d'isolation sous vide selon l'une quelconque des revendications précédentes, **caractérisé en ce que**
la face intérieure (35) de l'élément d'insertion (30) forme un ajustement avec jeu avec un objet à faire passer à travers.

9. Panneau d'isolation sous vide selon l'une quelconque des revendications précédentes, **caractérisé en ce que**
la face intérieure (35) de l'élément d'insertion (30) comporte un revêtement réduisant le frottement.
